# EUROPÄISCHE PATENTSCHRIFT

(11) **EP 3 356 701 B1**
(45) Veröffentlichungstag und Bekanntmachung des Hinweises auf die Patenterteilung: **01.04.2020**
(21) Anmeldenummer: 16757158.7
(22) Anmeldetag: 23.08.2016
(51) Int. Cl.: F16H 55/12

(54) **ZAHNRAD MIT SCHRÄGVERZAHNUNG UND SEGMENT FÜR EIN ZAHNRAD**
GEAR WITH HELICAL TOOTHING, AND SEGMENT FOR A GEAR
ROUE À DENTURE HÉLICOÏDALE ET SEGMENT DESTINÉ À UNE ROUE DENTÉE

(30) Priorität: 01.10.2015 DE 102015012659
(43) Veröffentlichungstag der Anmeldung: 08.08.2018
(73) Patentinhaber: SEW-EURODRIVE GmbH & Co. KG, 76646 Bruchsal (DE)
(72) Erfinder: WU, Zili, Tianjin 300060 (CN)
(86) Internationale Anmeldenummer: PCT/EP2016/025091
(87) Internationale Veröffentlichungsnummer: WO 2017/054931

(56) Entgegenhaltungen:
- WO-A1-2013/020639
- CN-A- 103 934 651
- CN-U- 202 520 903
- CN-U- 203 209 919
- DE-U1- 8 328 742

## Beschreibung

Die Erfindung betrifft ein Zahnrad mit Schrägverzahnung und ein Segment für ein Zahnrad.

Aus der WO 2013/020639 A1 ist ein segmentiertes Zahnrad bekannt.

Aus der CN 203 209 919 U ist ein segmentiertes Zahnrad bekannt.

Aus der CN 103 934 651 A ist ebenfalls ein solches Zahnrad bekannt.

Aus der gattungsgemäßen WO 2013/020639 A1 und aus der CN 202 520 903 U ist ein segmentiertes Zahnrad mit Schrägverzahnung bekannt.

Der Erfindung liegt daher die Aufgabe zugrunde, die Geräuschbildung bei im Eingriff stehenden Verzahnungen zu vermindern.

Erfindungsgemäß wird die Aufgabe bei dem Zahnrad nach den in Anspruch 1 angegebenen Merkmalen gelöst.

Wichtige Merkmale der Erfindung bei dem Zahnrad mit Schrägverzahnung, welches aus Segmenten zusammengesetzt ist,
wobei jedes Segment einen Verzahnungsabschnitt aufweist, der eine Schrägverzahnung aufweist,
wobei bei jedem Segment der Verzahnungsabschnitt über erste und zweite Stege sowie Verbindungsabschnitte mit dem Verbindungsbereich verbunden ist,
wobei die Verbindungsabschnitte, die ersten und die zweiten Stege jeweils beabstandet voneinander sind oder zumindest abschnittsweise voneinander beabstandet sind,
insbesondere so dass das Segment mehrere, insbesondere drei oder mehr, axial durchgehende Ausnehmungen aufweist,
insbesondere wobei der von den ersten Stegen überdeckte axiale Bereich beabstandet ist von dem von den zweiten Stegen überdeckten axialen Bereich, insbesondere so dass das Segment zumindest eine in Umfangsrichtung durchgehende Ausnehmung aufweist.

Von Vorteil ist dabei, dass mittels der Schrägverzahnung mit einem in Eingriff stehenden Verzahnungsteil Drehmoment geräuscharm übertragbar ist, obwohl das Zahnrad aus Segmenten zusammengesetzt ist.

Denn bei einem segmentierten Zahnrad nach Stand der Technik ist das Zahnrad in Umfangsrichtung aus Segmenten zusammengesetzt, wobei jedes Segment einen Umfangsabschnitt, also einen Umfangswinkelberiech des Zahnrades darstellt. Das Segment ist sozusagen mittels einer Schnittebene herausgeschnitten aus dem Zahnrad, welche sich in axialer und in von der Zahnradachse aus radialer Richtung erstreckt. Somit ist die Verzahnung im Stand der Technik als Geradverzahnung auszuführen, da ansonsten Zähne angeschnitten wären und somit Zahnbruchgefahr bestehen würde.

Bei der Erfindung hingegen wird eine Schrägverzahnung auf einem Verzahnungsabschnitt vorgesehen. Der Verzahnungsabschnitt ist entlang einer Zahnlücke abgeschnitten oder begrenzt. Auf diese Weise ist ein geräuscharmer Betrieb des Zahnrades ermöglicht, wobei allerdings der Verzahnungsabschnitt eine Grenzfläche hat, welche mit einem Schrägungswinkel gemäß dem Schrägungswinkel der Verzahnung verläuft. Erfindungsgemäß werden solche Grenzflächen benachbarter Segmente beabstandet, also ohne Kraftübertragung ausgeführt und die Verbindung beziehungsweise der zugehörige Kraftfluss nur im Bereich der Anlageflächen ausgeführt, die an den Verbindungsabschnitten angeordnet sind.

Die Anlagefläche ist jeweils aus Flanschflächen zusammengesetzt, welche jeweils ausschließlich radial und axial verlaufen, also nicht in Umfangsrichtung.

Die Flanschflächen des jeweiligen Segments liegen somit an entsprechenden Flanschflächen des jeweils nächstbenachbarten Segments an. Somit ist in Umfangsrichtung ein spielfreies Anliegen realisiert. Allerdings ist in axialer Richtung kein Anliegen von Flächen realisiert. Denn die zwischen den Flanschflächen angeordneten Stufen sind jeweils voneinander über einen Luftspalt beabstandet. Auch in radialer Richtung ist ein formschlüssiges Anliegen nicht realisiert. Auf diese Weise ist also eine Übertragung von Schall, dessen Schwingungsmode in Umfangsrichtung ohne wesentliche Verluste von einem Segment zum nächstbenachbarten Segment übertragbar, jedoch sind andere Schwingungsmoden stark abgedämpft, da in radialer und in axialer Richtung kein formschlüssiges Anliegen der Segmente aneinander realisiert ist. Somit ist eine geringere Geräuschbildung erreichbar, insbesondere im Vergleich zu einem einstückig ausgeführten Zahnrad.

Bei einer vorteilhaften Ausgestaltung sind bei jedem Segment erste und zweite Stege, Verzahnungsabschnitt, Verbindungsabschnitte und Verbindungsbereich einteilig und/oder einstückig ausgeführt. Von Vorteil ist dabei, dass das Segment eine hohe Belastbarkeit aufweist und in einer Aufspannung bearbeitbar ist und somit die relative Beabstandung der Bohrlöcher auch zur Verzahnung sehr präzise herstellbar ist.

Bei einer beanspruchten Ausgestaltung sind die ersten und die zweiten Stege gebogen ausgeführt, insbesondere konvex gekrümmt, insbesondere die ersten Stege nach axial vorne und die zweiten Stege nach axial hinten. Von Vorteil ist dabei, dass die Tragfähigkeit des Segments bei geringem Materialeinsatz und somit geringem Bearbeitungsaufwand erhöht ist. Bei einer vorteilhaften Ausgestaltung ist ein erster Verbindungsabschnitt am in Umfangsrichtung vorne angeordneten Endbereich des Segments angeordnet,
insbesondere und ein zweiter Verbindungsabschnitt am in Umfangsrichtung hinten angeordneten Endbereich des Segments angeordnet ist,
wobei der der erste Verbindungsabschnitt eine Anlagefläche aufweist, mit welcher das Segment am nächstbenachbarten Segment, insbesondere an der entsprechenden Anlagefläche des zweiten Verbindungsabschnitts des nächstbenachbarten Segments, anliegt,
wobei die Anlagefläche gestuft ausgeführt ist, so dass sie zumindest drei eben, insbesondere also plan, ausgeführten Flanschflächen aufweist,
wobei jede der Flanschflächen dabei auf einer jeweiligen Umfangswinkelposition angeordnet ist und einen jeweiligen axialen Bereich überdeckt,
wobei sind diese jeweiligen axialen Bereiche jeweils voneinander beabstandet oder höchstens aneinander angrenzend angeordnet sind, insbesondere wobei die jeweiligen axialen Bereiche nicht einander überlappen,
wobei die Umfangswinkelpositionen der Flanschflächen voneinander beabstandet sind, insbesondere in Umfangsrichtung streng monoton ansteigen mit zunehmender Axialposition der Flanschflächen. Von Vorteil ist dabei, dass das Ausrichten der Segmente zueinander vereinfacht ist und in axialer Richtung ein Formschluss vorhanden ist.

Bei einer vorteilhaften Ausgestaltung ist die Verzahnung eine Außenverzahnung. Von Vorteil ist dabei, dass die Herstellung einfach ausführbar ist.

Bei einer vorteilhaften Ausgestaltung weist der Verzahnungsabschnitt an seinen in Umfangsrichtung angeordneten Endbereichen jeweils eine zum benachbarten Segment zugewandte erste Grenzfläche auf, welche parallel zu einer Zahnlücke der Verzahnung verläuft,
insbesondere wobei die erste Grenzfläche sich in radialer Richtung und entlang einer Schraubenlinie, deren Schraubenachse die Zahnradachse ist und deren Schrägungswinkel dem Schrägungswinkel der Verzahnung entspricht, erstreckt. Von Vorteil ist dabei, dass eine Schrägverzahnung im Verzahnungsabschnitt vorsehbar ist, welche ohne unterbrochene Zähne verläuft und somit sehr belastbar ist.

Bei einer vorteilhaften Ausgestaltung ragt der Verzahnungsabschnitt, insbesondere mit einem einen Abschnitt der ersten Grenzfläche enthaltenden Abschnitt, in Umfangsrichtung über den Verbindungsabschnitt heraus,
insbesondere wobei der Verzahnungsabschnitt, insbesondere mit einem einen anderen Abschnitt der ersten Grenzfläche enthaltenden anderen Abschnitt, in Umfangsrichtung weniger weit sich erstreckt als der Verbindungsabschnitt. Von Vorteil ist dabei, dass der Verbindungsabschnitt in seinem in Umfangsrichtung liegenden Endbereich anders geschnitten beziehungsweise begrenzt ist als der Verzahnungsabschnitt. Denn der Verbindungsabschnitt ist an einer Umfangsposition begrenzt, erstreckt sich also mit seiner Endfläche hier nur in radialer und axialer Richtung; der Verzahnungsabschnitt jedoch ist gemäß einer Schrägverzahnung beschränkt, erstreckt sich also gemäß einer Schraubenlinie und radial von der Zahnradachse aus.

Bei einer vorteilhaften Ausgestaltung weist der Verbindungsabschnitt eine zweite Grenzfläche auf, welche in Umfangsrichtung und in axialer Richtung sich erstreckt und der radialen Innenseite des in Umfangsrichtung über den zugehörigen Verbindungsabschnitt herausragenden Abschnitts des Verzahnungsabschnitts des benachbarten Segments radial gegenübersteht. Von Vorteil ist dabei, die Verbindung besonders einfach herstellbar und präzise ausführbar zu machen.

Bei einer vorteilhaften Ausgestaltung ist zwischen den ersten Grenzflächen zweier benachbarter Segmente ein erster Abstand ausgeführt. Von Vorteil ist dabei, dass keine direkte Kraftübertragung zwischen den Verzahnungsabschnitten zweier benachbarter Segmente stattfindet.

Bei einer vorteilhaften Ausgestaltung ist zwischen der zweiten Grenzfläche und der radialen Innenseite des herausragenden Abschnitts des Verzahnungsabschnitts des benachbarten Segments ein zweiter Abstand vorgesehen. Von Vorteil ist dabei, dass keine direkte Kraftübertragung zwischen der Verbindungsabschnitt und dem Verzahnungsabschnitt des benachbarten Segments stattfindet.

Bei einer vorteilhaften Ausgestaltung weist der Verbindungsabschnitt eine Verbindungsfläche auf, an der die entsprechende Verbindungsfläche des jeweils benachbarten Segments angedrückt wird mittels Verbindungsschrauben. Von Vorteil ist dabei, dass die Kraftübertragung zwischen den Verbindungsabschnitten ausgeführt wird und hierbei an einer Umfangsposition eine tragfähige Verbindung ausführbar ist. die jeweiligen Flanschflächen sich berühren und aneinander drückbar sind von den Verbindungsschrauben zur Kraftübertragung.

Bei einer vorteilhaften Ausgestaltung erstreckt die jeweilige Flanschfläche sich in radialer Richtung und in axialer Richtung, insbesondere nicht aber in Umfangsrichtung, insbesondere ist sie also jeweils an einer einzigen Umfangsposition angeordnet. Von Vorteil ist dabei, dass die jeweilige Flanschfläche einfach und kostengünstig herstellbar ist.

Bei einer vorteilhaften Ausgestaltung ist in axialer Richtung zwischen einer ersten und einer dritten Flanschfläche eine zweite Flanschfläche angeordnet,
wobei die erste und dritte Flanschfläche jeweils ein Bohrloch für eine Schraube zum Ausrichten der Segmente zueinander aufweist. Von Vorteil ist dabei, dass ein exaktes Ausrichten und dann ein nachfolgendes Anziehen der Schrauben ermöglicht ist. Somit ist die Kraftübertragung zwischen den Verbindungsabschnitten und nicht zwischen den Verzahnungsabschnitten ermöglicht.

Bei einer vorteilhaften Ausgestaltung sind die Stege in einem geringeren Radialabstandsbereich angeordnet als der Verzahnungsabschnitt. Von Vorteil ist dabei, dass die Stege den radial aufgesetzten Verzahnungsabschnitt tragen und die Verbindungsschrauben zur Verbindung der Verbindungsabschnitte der benachbarten Segmente die Verzahnung des Zahnrades nicht durchbrechen oder anderweitig behindern, da sie auch auf kleinerem Radialabstand angeordnet sind als der Verzahnungsabschnitt und axial zwischen den ersten und zweiten Stegen Platz haben.

Bei einer vorteilhaften Ausgestaltung weist das Segment einen Verbindungsbereich zum Verbinden mit einer Trommel oder Welle auf, wobei das Zahnrad auf größerem Radialabstand als die Trommel beziehungsweise Welle angeordnet ist. Von Vorteil ist dabei, dass eine Trommel an ihrem Außenumfangs mit einem großen Zahnrad versehbar ist, so dass ein großes Drehmoment übertragbar ist.

Bei einer vorteilhaften Ausgestaltung ist zwischen den in axialer Richtung zueinander nächstbenachbarten Flanschflächen jeweils eine Stufe angeordnet,
wobei zwischen der jeweiligen Stufe des Segments und einer entsprechenden Stufe des jeweils nächstbenachbarten Segments ein axialer Abstand, insbesondere also Luftspalt vorhanden ist. Von Vorteil ist dabei, dass eine einfache Herstellung ausführbar ist.

Bei einer vorteilhaften Ausgestaltung ist der Quotient aus dem ersten Abstand und dem Außendurchmesser des Zahnrades kleiner als 0,0005, insbesondere kleiner als 0,00025 oder sogar kleiner als 0,000125,
und/oder dass
der Quotient aus dem zweiten Abstand und dem Außendurchmesser des Zahnrades kleiner ist als 0,0005, insbesondere kleiner als 0,00025 oder sogar kleiner als 0,000125, ist. Von Vorteil ist dabei, dass im Rahmen der Fertigungstoleranzen und thermisch bedingten Ausdehnungen eine Kraftübertragung sicher verhinderbar ist und trotz der Abstände ein geräuscharmer Betrieb ermöglicht ist. Denn die Abstände sind außerhalb des Eingriffsbereichs der Zähne, da der durch die Abstände erzeugte Schlitz der Zahnlücke, insbesondere also dem Boden der Zahnlücke, entlang verläuft.

Wichtige Merkmale bei dem Segment sind, dass das Segment aus ADI oder GGG Stahlguss gefertigt ist. Von Vorteil ist dabei, dass die Verzahnung hoch belastbar ist. Denn ADI ist ein Werkstoff auf Basis von Gusseisen mit Kugelgraphit. Durch eine besondere Wärmebehandlung werden eine hohe Festigkeit bei guter Dehnung, ein hoher Verschleißwiderstand bei gleich bleibend guter Dämpfung erreicht.

Der herausragende, also den Verbindungsabschnitt in Umfangsrichtung überragende Bereich des Verzahnungsabschnitts ist somit belastbar, da ADI eine hohe Festigkeit aufweist. Die Verzahnung in diesem Bereich wird also hoch belastbar, obwohl der Bereich herauskragt.

Weitere Vorteile ergeben sich aus den Unteransprüchen.

Die Erfindung wird nun anhand von Abbildungen näher erläutert:

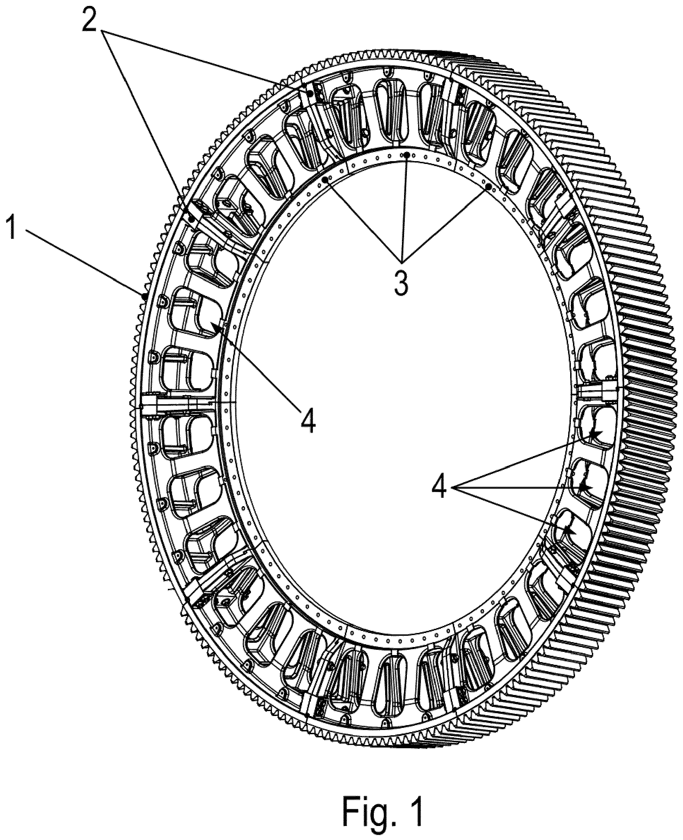

In der Figur 1 ist ein schrägverzahntes Zahnrad gezeigt, welches aus in Umfangsrichtung hintereinander angeordneten, gleichartig ausgeführten Segmenten zusammengesetzt ist.

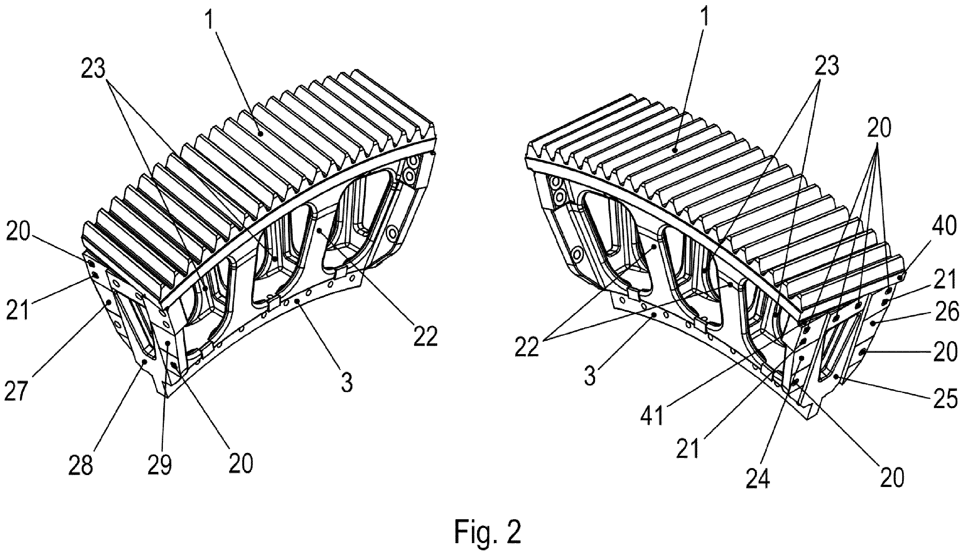

In der Figur 2 sind zwei der Segmente voneinander gelöst und in Schrägansicht gezeigt.

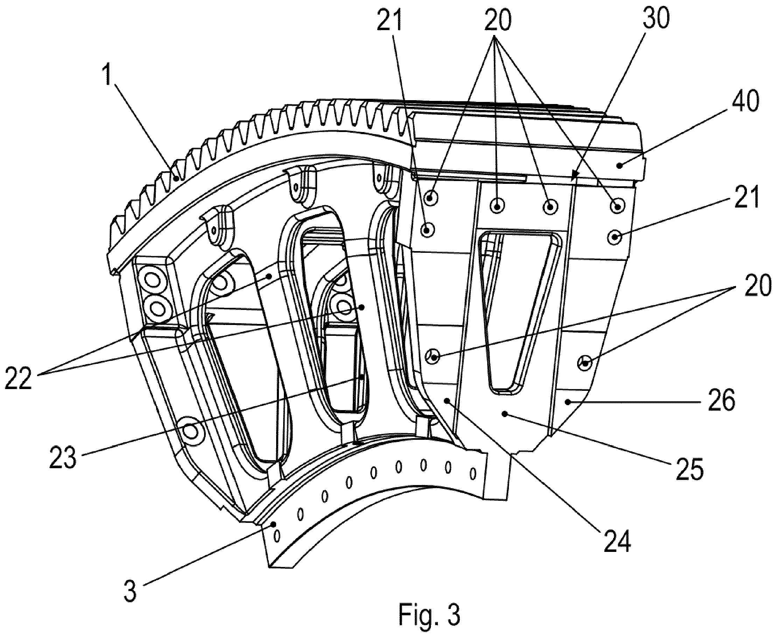

In der Figur 3 ist das erste der beiden Segmente gezeigt.
In der Figur 4 ist eine Draufsicht auf einen tangentialen Schnitt im Verbindungsbereich der beiden Segmente des Zahnrads gezeigt.

Das Zahnrad ist also aus gleichartig ausgeführten Segmenten zusammengesetzt, also aus identischen Segmenten.

Jedes Segment weist einen Verzahnungsabschnitt 1 auf, welcher als mit einer Außenverzahnung versehener Zylindermantelabschnitt ausgebildet ist.

Da in Umfangsrichtung zum Zusammensetzen des Zahnrades zehn Segmente verwendet werden, ähneln die Verzahnungsabschnitte 1 Zahnstangensegmenten, wobei die Stange entsprechend der Mantelfläche eines dem Zahnrad entsprechenden Zylinders gekrümmt ausgeführt ist.

Die hier genannte Umfangsrichtung bezieht sich auf das Zahnrad, ist also die Umfangsrichtung des Zahnrades. Der Radialabstand ist auf die Mitte des Zahnrades bezogen, also als Abstand von der Drehachse des Zahnrades bestimmbar. Die axiale Richtung ist eine zur Richtung der Drehachse parallel gerichtete Richtung.

Die Verzahnungsabschnitte 1 sind also herstellbar, indem ein Mantelabschnitt eines Hohlzylinders gefertigt wird und in seine Außenseite eine Verzahnung eingearbeitet wird. Dabei ist der Mantelabschnitt in axialer Richtung durch zwei Ebenen, insbesondere also Stirnflächenabschnitte des Zahnrades, begrenzt, deren Normale parallel zur Achsrichtung des Zahnrades, also axialen Richtung, ausgerichtet ist. Außerdem ist der Verzahnungsabschnitt 1 in Umfangsrichtung begrenzt durch eine Grenzfläche 40 und eine Flanschfläche, die mehrere Flächenabschnitte (24, 25, 26, 27, 28, 29) aufweist. Angrenzend an die Grenzfläche 40 ist die Grenzfläche 41 angeordnet, deren Normale in radialer Richtung ausgerichtet ist.

An der radialen Innenseite des Segments ist ein in Umfangsrichtung sich erstreckender Verbindungsbereich 3 für das Befestigen auf der Außenfläche einer Trommel vorgesehen.

Bei jedem Segment ist der Verzahnungsabschnitt 1 über Stege (22, 23) mit dem Verbindungsbereich 3 verbunden. Dabei sind erste Stege 22 axial vorne und zweite Stege 23 axial hinten angeordnet. Somit sind die ersten Stege 22 von den zweiten Stegen 23 axial beabstandet. Vorzugsweise ist jedem ersten Steg 22 jeweils genau ein zweiter Steg 23 zugeordnet, wobei dieser jeweilige erste Steg 22 und der jeweils zugeordnete zweite Steg 23 im jeweils selben Umfangswinkelbereich angeordnet sind.

Die ersten Stege 22 sind in Umfangsrichtung, also in Umfangsrichtung des Zahnrades, regelmäßig voneinander beabstandet. Somit sind die zweiten Stege 23 in Umfangsrichtung, also in Umfangsrichtung des Zahnrades, regelmäßig voneinander beabstandet.

Zwischen jeweils zwei zueinander nächstbenachbarten ersten Stegen 22 ist jeweils eine in axialer Richtung durchgehend ausgeführte Ausnehmung angeordnet.

Zwischen jeweils zwei zueinander nächstbenachbarten zweiten Stegen 23 ist jeweils eine in axialer Richtung durchgehend ausgeführte Ausnehmung angeordnet.

Darüber hinaus sind die ersten Stege 22 und die zweiten Stege 23 jeweils mit einem Biegebereich vorgesehen, so dass sie nach axial außen gebogen und somit konvex ausgeführt sind. Denn der im Segment axial zwischen den ersten und zweiten Stegen (22, 23) ausgeführte Hohlraum ist auf diese Weise vergrößert und daher geeignet, große Verbindungsschrauben aufzunehmen und einen genügend großen freien Raumbereich zur Verfügung zu stellen, der beispielsweise auch zur Betätigung der mit den Verbindungsschrauben herzustellenden Schraubverbindung geeignet ausgeführt ist.

Der Hohlraum ist dabei derart ausgeführt, dass er auch in Umfangsrichtung durch das Segment durchgehend ausgeführt ist. Infolge der genannten Ausformung der ersten und zweiten Stege (2, 23) ist der Hohlraum auch in axialer Richtung zumindest an den nicht von den Stegen (22, 23) und Verbindungsabschnitten 2 überdeckten Winkelpositionsbereichen durchgehend.

Der in Umfangsrichtung vordere Verbindungsabschnitt 2 eines ersten Segments liegt an dem in Umfangsrichtung hinteren Verbindungsabschnitt 2 eines weiteren Segments an.

Dabei ist die in Umfangsrichtung vorne angeordnete Anlagefläche gestuft ausgeführt, so dass sie aus drei, jeweils eben, also plan, ausgeführten Flanschflächen (24, 25, 26) zusammengesetzt ist. Jede der Flanschflächen (24, 25, 26) ist dabei auf einer jeweiligen Umfangswinkelposition angeordnet und überdeckt einen jeweiligen axialen Bereich. Dabei sind diese jeweiligen axialen Beriech jeweils voneinander beabstandet oder höchstens aneinander angrenzend angeordnet. Somit überlappen die jeweiligen axialen Bereiche nicht. Die Umfangswinkelpositionen der Flanschflächen (25, 26, 24) sind voneinander beabstandet und steigen in Umfangsrichtung an mit zunehmender Axialposition der Flanschflächen (24, 25, 26).

Die in Umfangsrichtung hinten angeordnete Anlagefläche ist entsprechend gestuft ausgeführt, so dass deren ebene, also plane Flanschflächen (27, 28, 29) jeweils an einer jeweiligen Flanschfläche (24, 25, 26) des nächstbenachbarten Segments anliegen.

Die Flanschflächen (24, 25, 26, 27, 28, 29) weisen Bohrlöcher 20 für Verbindungsschrauben und die axial äußeren Flanschflächen (24, 26, 27, 29) weisen jeweils zumindest ein Bohrloch 21 für Zentrierschrauben oder Schrauben zum Ausrichten der Segmente zueinander auf.

Somit ist ein Anliegen der Flanschfläche 24 an der Flanschfläche 29, ein Anliegen der Flanschfläche 25 an der Flanschfläche 28 und ein Anliegen der Flanschfläche 26 an der Flanschfläche 27 erreichbar und mittels der Zentrierschrauben ein Ausrichten der Segmente zueinander. Mittels Einbringen der Verbindungsschrauben werden danach die Segmente miteinander verbunden.

Zur Betätigung der Schraubverbindungen, also beispielsweise zum Anbringen und Betätigen der Schraubenköpfe mittels eines Werkzeuges bietet der oben erwähnte in Umfangsrichtung und zumindest teilweise auch in axialer Richtung durchgehende Hohlraum genügend Platz. Auch die bauchige, also konvexe Ausführung der Stege 22 vergrößert diesen Platz.

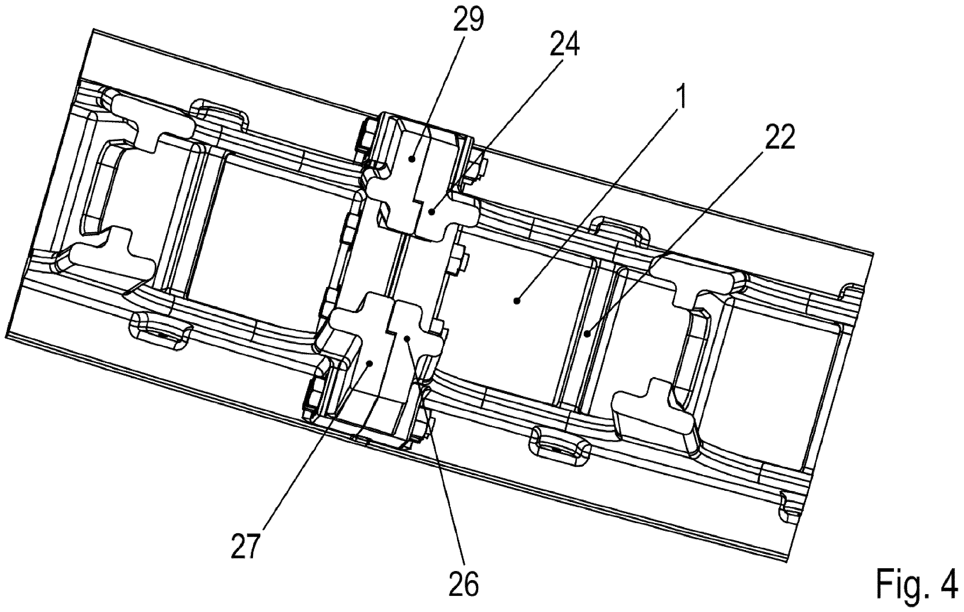

Wie in Figur 4 mittels tangential angeschnittenen Segmenten gezeigt, verläuft der Berührbereich zwischen den Verbindungsabschnitten 2 der beiden Segmente in axialer Richtung monoton aber nicht streng monoton in Umfangsrichtung, insbesondere auch innerhalb der Schnittfläche der Darstellung in Figur 4. Zwischen den Stufen ist dabei ein Spalt, insbesondere Luftspalt. Somit ist also zwischen der Stufe, welche zwischen der Flanschfläche 24 und der Flanschfläche 25 angeordnet ist, und der Stufe, welche zwischen der Flanschfläche 29 und Flanschfläche 28 angeordnet ist, ein Luftspalt angeordnet, so dass die beiden Stufen in axialer Richtung etwas voneinander beabstandet sind.

Die Grenzfläche 40 des Verzahnungsabschnitts 1 des Segments liegt ebenfalls berührend an einer entsprechenden Grenzfläche 40 des Verzahnungsabschnitts 1 des nächst benachbarten Segments an.

Somit wird an den Verbindungsabschnitt 2 eines jeweiligen Segments das benachbarte Segment mit seinem entsprechenden Verbindungsabschnitt 2 angeschraubt. Der Verbindungsabschnitt 2 erstreckt sich in radiale und in axiale Richtung. Somit befindet sich der gesamte Verbindungsabschnitt 2 in einem Umfangswickelbereich.

In der Verbindungsfläche sind die in Umfangsrichtung orientierten Bohrlöcher (20, 21) angeordnet. Dabei sind Bohrlöcher 20 zum Einbringen von Schrauben vorgesehen, mit welchen die jeweils benachbarten Segmente aneinander gedrückt werden. Außerdem ist auch mindestens ein Bohrloch 21 zum Einbringen einer Schraube zum relativen Ausrichten der Segmente zueinander vorgesehen. Somit ist vor dem festen Anziehen der Verbindungsschrauben ein Ausrichten der Segmente ermöglicht. Nach Durchführung des Ausrichtens werden die Verbindungsschrauben fest angeschraubt und somit die relative Lage der Segmente fixiert.

Der Verzahnungsabschnitt 1 weist an seiner radial außen sich befindenden Seite eine Verzahnung auf. Dabei ist die Verzahnung als Schrägverzahnung ausgeführt. Die Grenzfläche 40, mit welcher der Verzahnungsabschnitt 1 des Segments an den entsprechend benachbarten angrenzt, ist entlang einer Lücke der Verzahnung ausgeführt. Somit ist keiner der Zähne angeschnitten durch die Grenzfläche 40. Die Grenzfläche 40 erstreckt sich somit entsprechend der Schrägverzahnung, also eines Schraubenlinienabschnitts, und in radialer Richtung. In erster Näherung kann sie als plan betrachtet werden.

Da die Flanschflächen (24, 25, 26, 27, 28, 29) der Verbindungsabschnitte 2 aber in rein radialer und axialer Richtung orientiert sind orientiert sind, ragt der Verzahnungsabschnitt 1 abschnittsweise über den Verbindungsabschnitt 2 heraus. Somit ragt der Verzahnungsabschnitt 1 zumindest in einem ersten axialen Bereich über die Flanschfläche 26 in Umfangsrichtung heraus; in einem zweiten axialen Bereich ist der Verzahnungsabschnitt 1 in Umfangsrichtung zurückgezogen, so dass die Grenzfläche 41 sichtbar ist. Dabei erstreckt sich die Grenzfläche 41 in axialer Richtung und in Umfangsrichtung; also weist sie einen einzigen Radialabstand auf.

Die Segmente sind dabei derart toleriert und ausgeführt, dass zwei benachbarte Segmente sich an ihren Flanschflächen (24, 25, 26, 27, 28, 29) berühren, jedoch ein Abstand im Bereich der Grenzflächen 40 und 41 vorhanden ist. Hierbei wird bevorzugt ein Abstand von weniger als 1 mm, insbesondere von weniger als 0,5 mm eingehalten bei einem Außendurchmesser des aus den Segmenten zusammengesetzten Zahnrades von mehr als 2 Meter, insbesondere, von mehr als 4 Meter. Somit ist der Quotient aus Abstand und Außendurchmesser kleiner als 0,0005, insbesondere kleiner als 0,00025 oder sogar 0,000125.

Auf diese Weise sind auch thermisch bedingte und/oder montagebedingte Abstandsänderungen tolerierbar. Denn die kraftübertragenden Flanschflächen (24, 25, 26, 27, 28, 29) übernehmen vollständig die zwischen den benachbarten Segmenten durchzuleitenden Kräfte.

Der überragende Teil des Verzahnungsabschnittes 1 deckt die Grenzfläche 41 des benachbarten Segments ab, insbesondere in radialer Richtung.

Ebenso liegen die Grenzflächen 40 jeweils zweier benachbarter Segmente sich in Umfangsrichtung und auch in axialer Richtung gesehen gegenüber.

Bei weiteren nicht beanspruchten Ausführungsbeispielen ist das Zahnrad nicht schrägverzahnt sondern geradverzahnt ausgeführt. Vorzugsweise entfällt dann die Grenzfläche 41. Trotzdem verbleibt wiederum ein allerdings sehr enger Luftspalt zwischen den einander zugewandten Grenzflächen 40 der jeweils nächstbenachbarten Segmente.

### Bezugszeichenliste

1 Verzahnungsabschnitt
2 Verbindungsabschnitt
3 Verbindungsbereich für Trommel
4 Ausnehmung
20 Bohrloch für Verbindungsschrauben
21 Bohrloch für Zentrierschrauben oder Schrauben zum Ausrichten
22 Steg, insbesondere axial vorne
23 Steg, insbesondere axial hinten
24 ebene Flanschfläche
25 ebene Flanschfläche
26 ebene Flanschfläche
27 ebene Flanschfläche
28 ebene Flanschfläche
29 ebene Flanschfläche
40 Grenzfläche
41 Grenzfläche

## Patentansprüche

1. Zahnrad mit Schrägverzahnung, welches aus Segmenten, insbesondere aus mehr als vier, Segmenten, zusammengesetzt ist, wobei jedes Segment einen Verzahnungsabschnitt (1) aufweist, der eine Schrägverzahnung aufweist,
**dadurch gekennzeichnet, dass**
bei jedem Segment der Verzahnungsabschnitt über erste und zweite Stege (22,23) sowie Verbindungsabschnitte (2) mit dem Verbindungsbereich (3) verbunden ist, wobei die Verbindungsabschnitte, die ersten und die zweiten Stege (22,23) jeweils beabstandet voneinander sind oder zumindest abschnittsweise voneinander beabstandet sind, **wobei die ersten und die zweiten Stege** (22,23) **gebogen ausgeführt sind,** insbesondere so dass das Segment mehrere, insbesondere drei oder mehr, axial durchgehende Ausnehmungen aufweist, insbesondere wobei der von den ersten Stegen (22,23) überdeckte axiale Bereich beabstandet ist von dem von den zweiten Stegen (22,23) überdeckten axialen Bereich, insbesondere so dass das Segment zumindest eine in Umfangsrichtung durchgehende Ausnehmung aufweist.

2. Zahnrad nach Anspruch 1,
**dadurch gekennzeichnet, dass**
bei jedem Segment erste und zweite Stege, Verzahnungsabschnitt, Verbindungsabschnitte und Verbindungsbereich einteilig und/oder einstückig ausgeführt sind.

3. Zahnrad nach einem der vorangegangenen Ansprüche,
**dadurch gekennzeichnet, dass**
**die ersten und die zweiten Stege konvex gekrümmt ausgeführt sind oder die ersten Stege nach axial vorne und die zweiten Stege nach axial hinten gebogen ausgeführt sind.**

4. Zahnrad nach einem der vorangegangenen Ansprüche,
**dadurch gekennzeichnet, dass**
ein erster Verbindungsabschnitt am in Umfangsrichtung vorne angeordneten Endbereich des Segments angeordnet ist,
insbesondere und ein zweiter Verbindungsabschnitt am in Umfangsrichtung hinten angeordneten Endbereich des Segments angeordnet ist,
wobei der der erste Verbindungsabschnitt eine Anlagefläche aufweist, mit welcher das Segment am nächstbenachbarten Segment, insbesondere an der entsprechenden Anlagefläche des zweiten Verbindungsabschnitts des nächstbenachbarten Segments, anliegt,
wobei die Anlagefläche gestuft ausgeführt ist, so dass sie zumindest drei eben, insbesondere also plan, ausgeführten Flanschflächen (24, 25, 26) aufweist,
wobei jede der Flanschflächen (24, 25, 26) dabei auf einer jeweiligen Umfangswinkelposition angeordnet ist und einen jeweiligen axialen Bereich überdeckt,
wobei sind diese jeweiligen axialen Bereiche jeweils voneinander beabstandet oder höchstens aneinander angrenzend angeordnet sind, insbesondere wobei die jeweiligen axialen Bereiche nicht einander überlappen,
wobei die Umfangswinkelpositionen der Flanschflächen (25, 26, 24) voneinander beabstandet sind, insbesondere in Umfangsrichtung streng monoton ansteigen mit zunehmender Axialposition der Flanschflächen (24, 25, 26).

5. Zahnrad nach einem der vorangegangenen Ansprüche,
**dadurch gekennzeichnet, dass**
die Verzahnung eine Außenverzahnung ist.

6. Zahnrad nach einem der vorangegangenen Ansprüche,
**dadurch gekennzeichnet, dass**
der Verzahnungsabschnitt an seinen in Umfangsrichtung angeordneten Endbereichen jeweils eine zum benachbarten Segment zugewandte erste Grenzfläche (40) aufweist, welche parallel zu einer Zahnlücke der Verzahnung verläuft,
insbesondere wobei die erste Grenzfläche (40) sich in radialer Richtung und entlang einer Schraubenlinie, deren Schraubenachse die Zahnradachse ist und deren Schrägungswinkel dem Schrägungswinkel der Verzahnung entspricht, erstreckt.

7. Zahnrad nach einem der vorangegangenen Ansprüche,
**dadurch gekennzeichnet, dass**
der Verzahnungsabschnitt, insbesondere mit einem einen Abschnitt der ersten Grenzfläche (40) enthaltenden Abschnitt, in Umfangsrichtung über den Verbindungsabschnitt herausragt,
insbesondere wobei der Verzahnungsabschnitt, insbesondere mit einem einen anderen Abschnitt der ersten Grenzfläche (40) enthaltenden anderen Abschnitt, in Umfangsrichtung weniger weit sich erstreckt als der Verbindungsabschnitt.

8. Zahnrad nach einem der vorangegangenen Ansprüche,
**dadurch gekennzeichnet, dass**
der Verbindungsabschnitt eine zweite Grenzfläche (41) aufweist, welche in Umfangsrichtung und in axialer Richtung sich erstreckt und der radialen Innenseite des in Umfangsrichtung über den zugehörigen Verbindungsabschnitt herausragenden Abschnitts des Verzahnungsabschnitts des benachbarten Segments radial gegenübersteht.

9. Zahnrad nach einem der vorangegangenen Ansprüche,
**dadurch gekennzeichnet, dass**
zwischen den ersten Grenzflächen (40) zweier benachbarter Segmente ein erster Abstand ausgeführt ist.

10. Zahnrad nach einem der vorangegangenen Ansprüche,
**dadurch gekennzeichnet, dass**
ein zweiter Abstand zwischen der zweiten Grenzfläche (41) und der radialen Innenseite des herausragenden Abschnitts des Verzahnungsabschnitts des benachbarten Segments vorgesehen ist.

11. Zahnrad nach einem der vorangegangenen Ansprüche,
**dadurch gekennzeichnet, dass**
der Verbindungsabschnitt eine Anlagefläche aufweist, an der die entsprechende Anlagefläche des jeweils benachbarten Segments angedrückt wird mittels Verbindungsschrauben.

12. Zahnrad nach einem der vorangegangenen Ansprüche,
**dadurch gekennzeichnet, dass**
jede der Flanschflächen der Anlagefläche sich jeweils in radialer Richtung und in axialer Richtung erstreckt, insbesondere nicht aber in Umfangsrichtung, insbesondere also an einer jeweiligen einzigen Umfangsposition angeordnet ist.

13. Zahnrad nach einem der vorangegangenen Ansprüche,
**dadurch gekennzeichnet, dass**
in axialer Richtung zwischen einer ersten und einer dritten Flanschfläche eine zweite Flanschfläche angeordnet ist,
wobei die erste und dritte Flanschfläche jeweils ein Bohrloch (21) für eine Schraube zum Ausrichten der Segmente zueinander aufweist.

14. Zahnrad nach einem der vorangegangenen Ansprüche,
**dadurch gekennzeichnet, dass**
der Verbindungsabschnitt in einem geringeren Radialabstandsbereich angeordnet ist als der Verzahnungsabschnitt.

15. Zahnrad nach einem der vorangegangenen Ansprüche,
**dadurch gekennzeichnet, dass**
der Verbindungsbereich mit einer Trommel oder Welle verbunden ist, wobei das Zahnrad auf größerem Radialabstand als die Trommel beziehungsweise Welle angeordnet ist.

16. Zahnrad nach einem der vorangegangenen Ansprüche,
**dadurch gekennzeichnet, dass**
das Segment aus ADI oder GGG Stahlguss gefertigt ist.

17. Zahnrad nach einem der vorangegangenen Ansprüche,
**dadurch gekennzeichnet, dass**
zwischen den in axialer Richtung zueinander nächstbenachbarten Flanschflächen jeweils eine Stufe angeordnet ist,
wobei zwischen der jeweiligen Stufe des Segments und einer entsprechenden Stufe des jeweils nächstbenachbarten Segments ein axialer Abstand, insbesondere also Luftspalt vorhanden ist.

18. Zahnrad nach einem der vorangegangenen Ansprüche,
**dadurch gekennzeichnet, dass**
der Quotient aus dem ersten Abstand und dem Außendurchmesser des Zahnrades kleiner als 0,0005, insbesondere kleiner als 0,00025 oder sogar kleiner als 0,000125, ist,
und/oder dass
der Quotient aus dem zweiten Abstand und dem Außendurchmesser des Zahnrades kleiner als 0,0005, insbesondere kleiner als 0,00025 oder sogar kleiner als 0,000125, ist.

## Claims

1. A gear wheel with helical gearing which is composed of segments, in particular of more than four segments,
wherein each segment has a gearing portion (1) which has helical gearing,
**characterised in that**
in each segment the gearing portion is connected to the connection region (3) by way of first and second webs (22, 23) and also connection portions (2),
the connection portions, the first and the second webs (22, 23) in each case being spaced apart from each other or being spaced apart from each other at least in portions,
the first and the second webs (22, 23) being formed bent,
in particular so that the segment has a plurality of, in particular three or more, axially uninterrupted cutouts,
in particular with the axial region covered by the first webs (22, 23) being spaced apart from the axial region covered by the second webs (22, 23), in particular so that the segment has at least one cutout which is uninterrupted in the circumferential direction.

2. A gear wheel according to Claim 1,
**characterised in that**
in each segment first and second webs, the gearing portion, the connection portions and the connection region are formed in one part and/or in one piece.

3. A gear wheel according to one of the preceding claims,
**characterised in that**
the first and the second webs are formed convexly curved or the first webs are formed bent axially forwards and the second webs bent axially backwards.

4. A gear wheel according to one of the preceding claims,
**characterised in that**
a first connection portion is arranged on that end region of the segment which is arranged to the front in the circumferential direction,
in particular and a second connection portion is arranged on that end region of the segment which is arranged to the rear in the circumferential direction,
wherein the [the] first connection portion has a locating face with which the segment lies against the next-adjacent segment, in particular against the corresponding locating face of the second connection portion of the next-adjacent segment,
wherein the locating face is formed stepped, so that it has at least three flat, in particular therefore planar, flange faces (24, 25, 26),
wherein each of the flange faces (24, 25, 26) in such case is arranged at a respective angle-at-circumference position and covers a respective axial region,
wherein these respective axial regions in each case are spaced apart from each other or at most are arranged adjoining one another, in particular wherein the respective axial regions do not overlap each other,
wherein the angle-at-circumference positions of the flange faces (25, 26, 24) are spaced apart from each other, in particular rise strictly monotonically in the circumferential direction with increasing axial position of the flange faces (24, 25, 26).

5. A gear wheel according to one of the preceding claims,
**characterised in that**
the gearing is external gearing.

6. A gear wheel according to one of the preceding claims,
**characterised in that**
the gearing portion has at its end regions which are arranged in the circumferential direction in each case a first boundary face (40) facing the adjacent segment, which boundary face runs parallel to a tooth space of the gearing,
in particular with the first boundary face (40) extending in the radial direction and along a helical line, the helix axis of which is the gear wheel axis and the helix angle of which corresponds to the helix angle of the gearing.

7. A gear wheel according to one of the preceding claims,
**characterised in that**
the gearing portion, in particular with a portion containing a portion of the first boundary face (40), projects beyond the connection portion in the circumferential direction,
in particular with the gearing portion, in particular with another portion containing another portion of the first boundary face (40), extending less far in the circumferential direction than the connection portion.

8. A gear wheel according to one of the preceding claims,
**characterised in that**
the connection portion has a second boundary face (41) which extends in the circumferential direction and in the axial direction and is located radially opposite the radial inner side of that portion of the gearing portion of the adjacent segment which projects beyond the associated connection portion in the circumferential direction.

9. A gear wheel according to one of the preceding claims,
**characterised in that**
a first spacing is formed between the first boundary faces (40) of two adjacent segments.

10. A gear wheel according to one of the preceding claims,
**characterised in that**
a second spacing is provided between the second boundary face (41) and the radial inner side of the projecting portion of the gearing portion of the adjacent segment.

11. A gear wheel according to one of the preceding claims,
**characterised in that**
the connection portion has a locating face against which the corresponding locating face of the adjacent segment in each case is pressed by means of connecting screws.

12. A gear wheel according to one of the preceding claims,
**characterised in that**
each of the flange faces of the locating face extends in each case in the radial direction and in the axial direction, but in particular not in the circumferential direction, in particular therefore is arranged at a respective single circumferential position.

13. A gear wheel according to one of the preceding claims,
**characterised in that**
a second flange face is arranged in the axial direction between a first and a third flange face,
wherein the first and third flange face in each case have a drilled hole (21) for a screw for aligning the segments with each other.

14. A gear wheel according to one of the preceding claims,
**characterised in that**
the connection portion is arranged in a smaller radial distance region than the gearing portion.

15. A gear wheel according to one of the preceding claims,
**characterised in that**
the connection region is connected to a drum or shaft, the gear wheel being arranged at a greater radial distance than the drum or shaft.

16. A gear wheel according to one of the preceding claims,
**characterised in that**
the segment is manufactured from ADI or GGG cast steel.

17. A gear wheel according to one of the preceding claims,
**characterised in that**
in each case a step is arranged between the flange faces which are next-adjacent to each other in the axial direction,
wherein an axial spacing, in particular therefore an air gap, is present between the respective step of the segment and a corresponding step of the next-adjacent segment in each case.

18. A gear wheel according to one of the preceding claims,
**characterised in that**
the quotient of the first spacing and the external diameter of the gear wheel is less than 0.0005, in particular less than 0.00025 or even less than 0.000125,
and/or **in that**
the quotient of the second spacing and the external diameter of the gear wheel is less than 0.0005, in particular less than 0.00025 or even less than 0.000125.

## Revendications

1. Roue dentée à denture hélicoïdale, composée de segments et de plus de quatre segments, en particulier,
chaque segment comportant une zone dentée (1) munie d'une denture hélicoïdale,
**caractérisée par le fait que**,
dans chaque segment, la zone dentée est reliée à la zone de jonction (3) par des premières et secondes membrures (22, 23), ainsi que par des parties de liaison (2),
lesdites parties de liaison, lesdites premières et lesdites secondes membrures (22, 23) étant respectivement situées à distance les unes des autres, ou distantes les unes des autres au moins par tronçons,
lesdites premières et secondes membrures (22, 23) étant de réalisation arquée,
en particulier de façon telle que le segment présente plusieurs évidements axialement ininterrompus, notamment au nombre de trois ou plus,
sachant notamment que la région axiale couverte par les premières membrures (22, 23) est située à distance de la région axiale couverte par les secondes membrures (22, 23), en particulier de telle sorte que ledit segment comporte au moins un évidement ininterrompu dans la direction circonférentielle.

2. Roue dentée selon la revendication 1,
**caractérisée par le fait que**,
dans chaque segment, les premières et secondes membrures, la zone dentée, les parties de liaison et la zone de jonction sont réalisées d'un seul tenant et/ou d'une seule pièce.

3. Roue dentée selon l'une des revendications précédentes,
**caractérisée par le fait que**
les premières et secondes membrures sont réalisées avec courbure convexe, ou bien les premières membrures sont de réalisation arquée axialement vers l'avant et les secondes membrures sont de réalisation arquée axialement vers l'arrière.

4. Roue dentée selon l'une des revendications précédentes,
**caractérisée par le fait**
**qu'**une première partie de liaison se trouve au niveau de la région extrême du segment qui est située à l'avant dans la direction circonférentielle
et une seconde partie de liaison se trouve, en particulier, au niveau de la région extrême dudit segment qui est située à l'arrière dans ladite direction circonférentielle,
ladite première partie de liaison étant pourvue d'une surface d'appui par laquelle ledit segment est en applique contre le segment voisin le plus proche, en particulier contre la surface d'appui correspondante de la seconde partie de liaison dudit segment voisin le plus proche,
ladite surface d'appui étant de réalisation étagée, de sorte qu'elle comprend au moins trois surfaces de bridage (24, 25, 26) de réalisation aplatie, c'est-à-dire plane en particulier, chacune desdites surfaces de bridage (24, 25, 26) occupant alors un emplacement angulaire périphérique respectif, et couvrant une région axiale considérée,
ces régions axiales considérées étant, à chaque fois, mutuellement distantes ou tout au plus agencées avec contiguïté réciproque, sachant en particulier que lesdites régions axiales considérées ne se chevauchent pas mutuellement,
sachant que les emplacements angulaires périphériques des surfaces de bridage (24, 25, 26) sont distants les uns des autres et croissent, en particulier, de façon strictement monotone dans la direction circonférentielle au fur et à mesure de l'accroissement de l'emplacement axial desdites surfaces de bridage (24, 25, 26).

5. Roue dentée selon l'une des revendications précédentes,
**caractérisée par le fait que**
la denture est une denture extérieure.

6. Roue dentée selon l'une des revendications précédentes,
**caractérisée par le fait que**
la zone dentée est respectivement pourvue, au niveau de ses régions extrêmes disposées dans la direction circonférentielle, d'un premier interface (40) tourné vers le segment voisin et s'étendant parallèlement à un entredent de la denture,
lequel premier interface (40) s'étend, en particulier, dans la direction radiale et le long d'une ligne hélicoïdale dont l'axe de l'hélice est l'axe de ladite roue dentée, et dont l'angle d'hélice correspond à l'angle d'hélice de ladite denture.

7. Roue dentée selon l'une des revendications précédentes,
**caractérisée par le fait que**
la zone dentée fait saillie au-delà de la partie de liaison dans la direction circonférentielle, en particulier par un tronçon renfermant un tronçon du premier interface (40),
sachant notamment que l'étendue de ladite zone dentée est moindre que celle de ladite partie de liaison, dans ladite direction circonférentielle, en particulier par un autre tronçon renfermant un autre tronçon dudit premier interface (40).

8. Roue dentée selon l'une des revendications précédentes,
**caractérisée par le fait que**
la partie de liaison est dotée d'un second interface (41) s'étendant dans la direction circonférentielle et dans la direction axiale, et situé radialement en vis-à-vis de la face intérieure radiale du tronçon de la zone dentée du segment voisin qui fait saillie, dans ladite direction circonférentielle, au-delà de la partie de liaison associée.

9. Roue dentée selon l'une des revendications précédentes,
**caractérisée par le fait**
**qu'**une première distance est réservée entre les premiers interfaces (40) de deux segments voisins.

10. Roue dentée selon l'une des revendications précédentes,
**caractérisée par le fait**
**qu'**une seconde distance est prévue entre le second interface (41) et la face intérieure radiale du tronçon saillant de la zone dentée du segment voisin.

11. Roue dentée selon l'une des revendications précédentes,
**caractérisée par le fait que**
la partie de liaison est munie d'une surface d'appui, contre laquelle la surface d'appui correspondante du segment respectivement voisin est pressée au moyen de vis de solidarisation.

12. Roue dentée selon l'une des revendications précédentes,
**caractérisée par le fait que**
chacune des surfaces de bridage de la surface d'appui s'étend, à chaque fois, dans la direction radiale et dans la direction axiale, mais toutefois pas dans la direction circonférentielle, c'est-à-dire qu'elle occupe notamment un unique emplacement périphérique respectif.

13. Roue dentée selon l'une des revendications précédentes,
**caractérisée par le fait**
**qu'**une deuxième surface de bridage est interposée entre des première et troisième surfaces de bridage, dans la direction axiale,
lesquelles première et troisième surfaces de bridage sont percées, à chaque fois, d'un trou foré (21) destiné à une vis dévolue à l'alignement mutuel des segments.

14. Roue dentée selon l'une des revendications précédentes,
**caractérisée par le fait que**
la partie de liaison se trouve dans une région située à une moindre distance radiale que la zone dentée.

15. Roue dentée selon l'une des revendications précédentes,
**caractérisée par le fait que**
la zone de jonction est reliée à un tambour ou à un arbre, ladite roue dentée étant respectivement située à une plus grande distance radiale que ledit tambour ou ledit arbre.

16. Roue dentée selon l'une des revendications précédentes,
**caractérisée par le fait que**
le segment est fabriqué en acier coulé ADI ou GGG.

17. Roue dentée selon l'une des revendications précédentes,
**caractérisée par le fait**
**qu'**un gradin est interposé, à chaque fois, entre les surfaces de bridage les plus proches les unes des autres dans la direction axiale,
une distance axiale, c'est-à-dire un entrefer en particulier, étant réservé(e) entre le gradin considéré du segment et un gradin correspondant du segment voisin respectivement le plus proche.

18. Roue dentée selon l'une des revendications précédentes,
**caractérisée par le fait que**
le quotient de la première distance et du diamètre extérieur de ladite roue dentée est inférieur à 0,0005, notamment inférieur à 0,00025, voire même inférieur à 0,000125 ; et/ou **par le fait que**
le quotient de la seconde distance et dudit diamètre extérieur de la roue dentée est inférieur à 0,0005, notamment inférieur à 0,00025, voire même inférieur à 0,000125.
